# EUROPÄISCHE PATENTSCHRIFT

(11) **EP 2 028 480 B1**
(45) Veröffentlichungstag und Bekanntmachung des Hinweises auf die Patenterteilung: **01.02.2012**
(21) Anmeldenummer: 08012110.6
(22) Anmeldetag: 04.07.2008
(51) Int. Cl.: G01N 21/958, G01M 11/02

(54) **Verfahren und Vorrichtung zum Prüfen eines Prüfobjekts**
Method and device for inspecting a test object
Procédé et dispositif pour l'inspection d'un objet de contrôle

(30) Priorität: 22.08.2007 DE 102007039630
(43) Veröffentlichungstag der Anmeldung: 25.02.2009
(73) Patentinhaber: Ullrich GmbH, 94227 Zwiesel (DE)
(72) Erfinder: Wild, Michael, 94469 Deggendorf (DE)
(74) Vertreter: Müller-Boré & Partner Patentanwälte

(56) Entgegenhaltungen:
- WO-A-2007/023042
- DE-A1-102005 033 013
- US-A- 4 232 966
- ZEIDLER G.: 'Elastomere Optische Fasern (EOF)', [Online] 2003, ITG-FG TREFFEN OFFENBURG, 25./26.03.2003, XP007916695 Gefunden im Internet: <URL:http://www.pofac.de/downloads/itgfg/fg t15/FGT15_Offbg_Zeidler_EOF.pdf> [gefunden am 2011-01-11]

## Beschreibung

Die vorliegende Erfindung betrifft ein Verfahren zum Prüfen eines Prüfobjekts und eine Vorrichtung zum Prüfen eines Prüfobjekts.

Herkömmlicherweise wird ein sogenanntes Halbzeug aus Glas gefertigt, das weiter bearbeitet werden kann. Ein solches Halbzeug wird beispielsweise als "Gob" bezeichnet. Ein Gob kann zum Beispiel im wesentlichen kegelstumpfförmig ausgebildet sein. Zur Weiterverarbeitung kann ein Gob blank-gepreßt werden und daraus eine Linse, ein Flasche oder ein anderes gläsernes Objekt hergestellt werden. Herstellungsbedingt können Außenflächen eines Gobs im wesentlichen blank, transparent und glänzend sein. Herkömmlicherweise sind die Außenflächen jedoch wellig. Vor allem eine Mantelfläche des Gobs kann sehr wellig sein.

Werden die Gobs beispielsweise zu optischen Linsen weiterverarbeitet, sind die Anforderungen an die Gobs hinsichtlich Flecken, Blasen, Steinchen und Schlieren sehr hoch. Aus diesem Grund werden die Gobs herkömmlicherweise manuell sortiert und bei der Häufung von kritischen Fehlern und Reklamationen gezielt nachsortiert. Eine hohe Stückzahl der Fertigung und die schwierige Erkennbarkeit von Defekten, wie z.B. Blasen bis 0,2 mm und/oder. Steinchen bis 0,05 mm, beschränken jedoch eine Sichtprüfung.

Weitere Schwierigkeiten bei der Sichtprüfung entstehen z.B. aufgrund von Verzerrung der Abbildung des Gobs und der darin enthaltenen Defekte, die durch die Welligkeit der Oberfläche hervorgerufen werden. Um diese Verzerrungen zu vermeiden, werden herkömmlicherweise Gobs in Immersion in einer Flüssigkeit mit nahezu identischem Brechungsindex geprüft. Die Flüssigimmersion ist jedoch für die Prüfung von mehreren 1000 Gobs pro Tag aufgrund der notwendigen Gobreinigung und Trocknung nicht praktikabel.

Dokument WO 2007/023042 A1 offenbart ein Verfahren und eine Vorrichtung zur Prüfung einer Optik. Die Optik wird dabei zwischen zwei durchsichtigen Anlegeplatten eingeklemmt. Ein Immersionsflüssigkeitsfilm ist dabei auf der Oberfläche der Optik ausgebildet, um die Rauhigkeit der Optikoberfläche auszugleichen und so die Lichtstreuung zu vermindern. Dadurch ermöglicht das in der WO 2007/023042 A1 offenbarte Verfahren die Verwendung von nicht präzise polierten Prüflingen.

Dokument US 4,232,966 offenbart eine Vorrichtung zur Bestimmung der Oberflächenkrümmung von Kontaktlinsen mittels einer Aufsichtprüfung. Um eine sicher Lage der Kontaktlinse während der Prüfung zu gewährleisten, ist die Kontaktlinse durch ein Elastomerelement gehalten.

Es ist Aufgabe der Erfindung, eine Möglichkeit für eine einfache und schnelle Durchstrahlungsprüfung eines Prüfobjekts bereitzustellen.

Diese Aufgabe wird mittels eines Verfahrens mit den Merkmalen des Anspruchs 1, mittels einer Vorrichtung mit den Merkmalen des Anspruchs 8 sowie einer Anordnung mit den Merkmalen des Anspruchs 17 gelöst. Bevorzugte Ausführungsformen ergeben sich aus den Unteransprüchen.

### Verfahren gemäß eines Aspekts der Erfindung

Ein Aspekt der vorliegenden Erfindung betrifft ein Verfahren zum Prüfen eines Prüfobjekts mit den Schritten:
- Anordnen des Prüfobjekts an einem verformbaren Kontaktelement einer Halteeinrichtung,
   wobei das Kontaktelement zumindest teilweise verformt wird, so daß zumindest eine Teilfläche des Prüfobjekts mit zumindest einer Teilfläche des Kontaktelements spaltfrei in Kontakt ist und
   wobei für zumindest zwei Kontaktpunkte des Kontaktelements, die mit der Teilfläche des Prüfobjekts in Kontakt sind, bei einem Durchstrahlen mittels elektromagnetischer Strahlung, welche parallel zu einer vordefinierten Durchstrahlrichtung ist, eine optische Weglänge der elektromagnetischen Strahlung durch die Halteeinrichtung und das Prüfobjekt im wesentlichen identisch ist;
- Durchstrahlen der elektromagnetischen Strahlung parallel zu der vordefinierten Durchstrahlrichtung durch die Halteeinrichtung und das Prüfobjekt;
- Detektieren der elektromagnetischen Strahlung nach Durchstrahlen; und
- Auswerten der detektierten elektromagnetischen Strahlung.
   Vorteilhafterweise wird somit eine optische Prüfung von einem oder mehreren Körpern, beispielsweise transparenten Körpern als bevorzugten Prüfobjekten, ermöglicht. Hierbei ist es weiterhin vorteilhafterweise nicht notwendig, daß die Prüfobjekte parallele und/oder plane Flächen aufweisen. Vielmehr ermöglicht das Verfahren eine einfache und schnelle Prüfung von Prüfobjekten mit nicht planparallelen Seiten und vorzugsweise geringer Rauheit, wie z.B. Linsen, Gobs, usw., in Durchlicht, als bevorzugter elektromagnetischer Strahlung. Hierbei wird eine aufwendige optische Anordnung zur Kompensation der gekrümmten Oberflächen und/oder eine Immersion des Prüfobjekts in einer Flüssigkeit vorteilhafterweise vermieden. Eine Untersuchung auf Störungen und Defekte im Glas, wie z.B. Steinchen, Blasen, Schlieren, evtl. Spannungen, usw. ist daher in einfacher Weise möglich. Vorteilhafterweise werden Reflexionen oder Streuungen vermindert, die durch die Oberflächenrauhigkeit des Prüfobjektes verursacht werden. Daher ist es vorteilhafterweise nicht notwendig, daß das Prüfobjekt glatte Flächen bzw. Oberflächen aufweist. Aufgrund der verzerrungsarmen Durchstrahlung und der Verminderung der Reflexions- und Streueffekte anhand der im wesentlichen identischen optischen Weglänge der elektromagnetischen Strahlung durch die Halteeinrichtung und das Prüfobjekt, ist eine verzerrungsarme Abbildung von Defekten im Inneren des Prüfkörpers möglich. Vorteilhafterweise wird dadurch die Detektionsgrenze für die räumliche Ausdehnung von Störungen bzw. Defekten herabgesetzt.
   Folglich kann vorteilhafterweise die Prüfung nicht definiert geformter Prüfobjekte, wie z.B. Glaskörper, automatisiert durchgeführt werden, wobei das Verfahren insbesondere auch für hohe Stückzahlen eingesetzt werden kann.
   Der Begriff "spaltfrei" im Sinne der vorliegenden Erfindung ist beispielsweise synonym zu "formschlüssig". In anderen Worten befindet sich zwischen dem Kontaktelement und der Teilfläche des Prüfobjekts, das mit der elektromagnetischen Strahlung bestrahlt wird, keine weiteres Material. Insbesondere kein Material, dessen Brechungsindex von dem Brechungsindex des Kontaktelements verschieden ist.
   Weiterhin wird unter dem Begriff "optische Weglänge" der Weg verstanden, auf dem die elektromagnetische Strahlung das Kontaktelement und das Prüfobjekt durchdringt. Für mindestens zwei unterschiedliche Wege, auf denen die elektromagnetische Strahlung das Kontaktelement und das Prüfobjekt durchdringt, ist die optische Weglänge im wesentlichen identisch. In anderen Worten kann die elektromagnetische Strahlung auf einem ersten Weg einen größeren Volumenanteil des Prüfobjekts durchdringen, als auf einem zweiten Weg. Ebenso kann auf dem zweiten Weg die elektromagnetische Strahlung einen größeren Volumenanteil des Kontaktelements durchdringen, als auf dem ersten Weg. Das Kontaktelement ist jedoch so gewählt, daß die gesamte optische Weglänge (d.h. die gemeinsame optische Weglänge durch das Kontaktelement und das Prüfobjekt) auf dem ersten Weg mit der gesamten optischen Weglänge (die gemeinsame optische Weglänge durch das Kontaktelement und das Prüfobjekt) auf dem zweiten Weg im wesentlichen identisch ist. In anderen Worten liegt eine geringe Brechungsindexänderung (Δn < 0,02 vorzugsweise Δn < 0,002) beim Übergang von dem Kontaktelement in das Prüfobjekt vor. Dies wird insbesondere dadurch erreicht, daß das verformbare Kontaktelement die ungleichmäßige Form des Prüfobjekts ausgleicht, und zwar durch die spaltfreie Anordnung des Prüfobjekts an dem Kontaktelement. In anderen Worten wird die Oberflächenrauheit des Prüfobjekts durch das Kontaktelement ausgeglichen.
   Die Spaltfreie Anordnung kann auch für mehrere Punkte, beispielsweise 3, 4, 5, 10, 15, 25, 50, usw. Punkte, insbesondere für eine gesamte Teilfläche des Kontaktelements gelten, an der das Kontaktelement mit dem Prüfobjekt in Kontakt ist. Folglich ist vorzugsweise die optische Weglänge durch das Kontaktelement und das Prüfobjekt für parallele elektromagnetische Strahlung, welche das Kontaktelement, die Kontaktfläche und das Prüfobjekt durchstrahlt, für alle Punkte der Kontaktfläche, die mit dem Prüfobjekt in Kontakt sind, im wesentlichen identisch.
   Die optische Weglänge kann auch durch Verunreinigungen und/oder Schlieren usw. in dem Prüfobjekt verändert werden. In diesem Fall kann die optische Weglänge des ersten optischen Wegs von dem zweiten optischen Weg verschieden sein. Dieser Unterschied wird vorzugsweise jedoch durch die Auswertung der detektierten elektromagnetischen Strahlung detektiert und somit können die den Wegunterschied verursachenden Verunreinigung(en) und/oder Schliere(n) usw. festgestellt werden. Folglich gilt im Idealfall eine wesentlich identische optische Weglänge auf dem ersten und dem zweiten optischen Weg nur für Prüfobjekte, die keine Verunreinigungen, Schlieren usw. aufweisen, d.h. für im wesentlichen homogene Prüfobjekte. Insbesondere gilt dies für vollständig homogene Prüfobjekte.
   Weiterhin kann die Durchstrahlrichtung im wesentlichen frei vorgegeben werden. Die Durchstrahlrichtung ist insbesondere senkrecht zu der Richtung des elektrischen Feldes und zu der Richtung des magnetischen Feldes der elektromagnetischen Strahlung.
   Der Begriff "im wesentlichen identisch" bzw. "annähernd identisch" beinhaltet im Sinne der vorliegenden Erfindung vollständig identisch oder mit geringen Abweichungen von einer identischen optischen Weglänge. Beispielsweise kann eine Abweichung um 1%, 2%, 5% oder 10% möglich sein. Die Abweichung kann auch in der Größenordnung der Meßgenauigkeit des optischen Weges liegen.
   Der Begriff "komplementär" im Sinne der vorliegenden Erfindung beinhaltet "das andere ergänzend". Beispielsweise können die komplementären Kontaktelemente das Prüfobjekt an gegenüberliegenden Flächen kontaktieren. Insbesondere können sich das Kontaktelement und das komplementäre Kontaktelement gegenüberliegen.

### Bevorzugte Ausführungsvarianten des Verfahrens

Vorzugsweise umfaßt das Verfahren den weiteren Schritt:
Anordnen des Prüfobjekts an einem verformbaren komplementären

Kontaktelement einer komplementären Halteeinrichtung, wobei das komplementäre Kontaktelement zumindest teilweise verformt wird, so daß zumindest eine komplementäre Teilfläche des Prüfobjekts mit zumindest einer komplementären Teilfläche des komplementären Kontaktelements spaltfrei in Kontakt ist, wobei

für zumindest zwei Kontaktpunkte des Kontaktelements und/oder des komplementären Kontaktelements, die mit der Teilfläche des Prüfobjekts und/oder der komplementären Teilfläche des Prüfobjekts in Kontakt sind, bei dem Durchstrahlen mittels elektromagnetischer Strahlung, welche parallel zu der vordefinierten Durchstrahlrichtung ist, eine optische Weglänge der elektromagnetischen Strahlung durch die Halteeinrichtung, das Prüfobjekt und die komplementäre Halteeinrichtung im wesentlichen identisch ist; und wobei

beim Durchstrahlen der elektromagnetischen Strahlung durch die Halteeinrichtung und das Prüfobjekt auch die komplementäre Halteeinrichtung durchstrahlt wird.

Die obigen Ausführungen gelten sinngemäß für eine Kombination des Kontaktelements, des Prüfobjekts und des komplementären Kontaktelements. Insbesondere gelten die obigen Ausführungen in Bezug auf das Kontaktelement sinngemäß für das komplementäre Kontaktelement.

### Vorzugsweise umfaßt das Verfahren den initialen Schritt:

Auswahl des Kontaktelements und/oder des komplementären Kontaktelements mit einem optischen Brechungsindex, der im wesentlichen gleich dem optischen Brechungsindex des Prüfobjektes ist.

In anderen Worten kann die elektromagnetische Strahlung zumindest in den Bereichen bzw. Flächen spaltfreier Anordnung von Kontaktelement(en) und Prüfobjekt das bzw. die Kontaktelemente und das Prüfobjekt durchstrahlen, wobei von der parallelen Strahlung aufgrund des im wesentlichen identischen Brechungsindexes im Kontaktelement und im Prüfobjekt Volumenbereiche im wesentlichen konstanten Brechungsindexes durchstrahlt werden. Das bzw. die Kontaktelement(e) und das Prüfobjekt erscheinen daher in diesen Bereichen als ein einheitlicher Körper. Eine Abweichung des Brechungsindex des Kontaktelements und des Prüfobjekts von 20% bis etwa 10%, vorzugsweise etwa 5%, besonders bevorzugt etwa 1% ist möglich.

Weiterhin vorzugsweise wird die elektromagnetische Strahlung anhand einer Bilderzeugungseinrichtung detektiert.

Die Bilderzeugungseinrichtung kann z.B. ein CCD-Chip, eine digitale Kamera, ein optischer Sensor, eine Interferometer, usw. sein. Insbesondere kann die Bilderzeugungseinrichtung eine automatische, elektronische Bildverarbeitung auch an Stellen mit stärkerer Oberflächenkrümmung ermöglichen. Hierbei können bekannte elektronische Bildverarbeitungsverfahren und -vorrichtungen zur Auswertung eingesetzt werden. Unter anderem können klassische Nachweismethoden für Glasfehler, wie sie z.B. bei Jebsen-Marwedel "Glastechnische Fabrikationsfehler", Springer 1980, beschrieben sind, eingesetzt werden.

Besonders bevorzugt wird die detektierte elektromagnetische Strahlung automatisch anhand eines Bildverarbeitungsverfahrens untersucht und ausgewertet.

Weiterhin vorzugsweise ist die elektromagnetische Strahlung homogenes Licht, wobei anhand des Bildverarbeitungsverfahrens Inhomogenitäten in der detektieren elektromagnetischen Strahlung detektiert werden.

### Vorrichtung gemäß eines Aspekts der Erfindung

Ein weiterer Aspekt der vorliegenden Erfindung betrifft eine Vorrichtung zum Halten zumindest eines Prüfobjekts mit

- einer Halteeinrichtung, mit zumindest einem verformbaren Kontaktelement, wobei

an dem verformbaren Kontaktelement ein Prüfobjekt derart anordenbar ist, daß
-- zumindest eine Teilfläche des Kontaktelements mit zumindest einer Teilfläche des Prüfobjekts im wesentlichen spaltfrei in Kontakt bringbar ist und
-- für zumindest zwei Kontaktpunkte des Kontaktelements, die mit der Teilfläche des Prüfobjekts in Kontakt sind, bei einem Durchstrahlen mittels elektromagnetischer Strahlung, welche parallel zu einer vordefinierten Durchstrahlrichtung ist, eine optische Weglänge der elektromagnetischen Strahlung durch die Halteeinrichtung und das Prüfobjekt im wesentlichen identisch ist.

### Bevorzugte Ausführungsformen der Vorrichtung

Vorzugsweise weist die Vorrichtung eine komplementäre Halteeinrichtung mit zumindest einem verformbaren komplementären Kontaktelement auf, wobei zumindest eine komplementäre Teilfläche des Prüfobjekts mit zumindest einer komplementären Teilfläche des komplementären Kontaktelements im wesentlichen spaltfrei in Kontakt bringbar ist.

Weiterhin vorzugsweise weist bzw. weisen das verformbare Kontaktelement und/oder das komplementäre verformbare Kontaktelement einen optischen Brechungsindex auf, der im wesentlichen gleich einem optischen Brechungsindex des Prüfobjektes ist. Insbesondere ist bzw. sind das Kontaktelement und/oder das komplementäre Kontaktelement derart auswählbar, daß das Kontaktelement und/oder das komplementäre Kontaktelement optischen Brechungsindex aufweist bzw. aufweisen, der im wesentlichen gleich einem optischen Brechungsindex des Prüfobjektes ist bzw. sind.

Besonders bevorzugt ist das Prüfobjekt zumindest teilweise zwischen dem Kontaktelement und dem komplementären Kontaktelement anordenbar.

Gemäß einer weiteren bevorzugten Ausführungsform weist die Halteeinrichtung eine Basiseinrichtung auf, an welcher das verformbare Kontaktelement angeordnet ist.

Gemäß einer weiteren bevorzugten Ausführungsform weist die komplementäre Halteeinrichtung eine komplementäre Basiseinrichtung auf, an welcher das verformbare komplementäre Kontaktelement angeordnet ist.

Insbesondere können die Basiseinrichtung das Kontaktelement integral miteinander verbunden sein bzw. eine Einheit bilden, bzw. einstückig sein bzw. aus einem einheitlichen Material bestehen.

Besonders bevorzugt weist bzw. weisen die Basiseinrichtung und/oder die komplementäre Basiseinrichtung planparallele Flächen auf.

In anderen Worten kann bzw. können die Basiseinrichtung und/oder die komplementäre Basiseinrichtung plattenförmig sein. Insbesondere können die Basiseinrichtungen parallel zueinander anordenbar sein.

Erfindungsgemäß besteht bzw. bestehen das Kontaktelement und/oder das komplementäre Kontaktelement aus einem Elastomer, das zumindest bereichsweise von einer Folie umgeben ist, wobei vorzugsweise das Elastomer vollständig von einer Folie umgeben ist, oder aus einer Flüssigkeit oder einem Gel, die bzw. das sich in einem aus einer Folie ausgebildeten Beutel befindet. In anderen Worten können zwei Beutel vorhanden sein, nämlich einer, der

dem Kontaktelement entspricht und einer, der dem komplementären Kontaktelement entspricht.

Hierbei haben vorzugsweise das Gel bzw. die Flüssigkeit und die Folie und das Prüfobjekt einen im wesentlichen identischen Brechungsindex.

Besonders bevorzugt weist die Vorrichtung eine Detektionseinrichtung auf, welche ausgelegt ist elektromagnetische Strahlung nach zumindest teilweisem Durchstrahlen des Kontaktelements und zumindest teilweisem Durchstrahlen des Prüfobjekts zu detektieren.

Beispielsweise kann die Detektionseinrichtung eine Kamera sein, die mit dem Kontaktelement und/oder der Basiseinrichtung verbunden ist bzw. damit in Kontakt steht. Die Detektionseinrichtung kann auch eine Glasplatte bzw. eine Glasfläche aufweisen, die mit dem Kontaktelement (auf der dem Prüfobjekt gegenüberliegenden Seite) in Kontakt steht. Die Detektionseinrichtung kann beispielsweise ein Kameraobjektiv aufweisen, welches mit der Basiseinrichtung und/oder dem Kontaktelement verbunden ist.

Weiterhin vorzugsweise weist die Vorrichtung eine Auswerteeinrichtung auf, welche ausgelegt ist, die detektierte elektromagnetische Strahlung auszuwerten.

Eine Auswerteeinrichtung kann z.B. einen Mikroprozessor enthalten. Der Mikroprozessor kann hierbei auch Bestandteil einer anderen Einrichtung sein und beispielsweise in Datenaustausch mit der Detektionseinrichtung sein.

Vorzugsweise umfaßt die Vorrichtung eine Darstellungseinrichtung, welche ausgelegt ist die detektierte elektromagnetische Strahlung darzustellen.

Beispielsweise kann die Darstellungseinrichtung ein Monitor sein. Der Monitor kann auch Bestandteil einer anderen Einrichtung sein und in Datenaustausch mit der Vorrichtung stehen.

### Figurenbeschreibung

Nachfolgend werden bevorzugte Ausführungsformen der vorliegenden Erfindung beispielhaft anhand begleitender Figuren beschrieben. Es zeigt
- Figur 1:: eine Schemaansicht einer bevorzugten Ausführungsform und
- Figur 2:: eine weitere Schemaansicht.

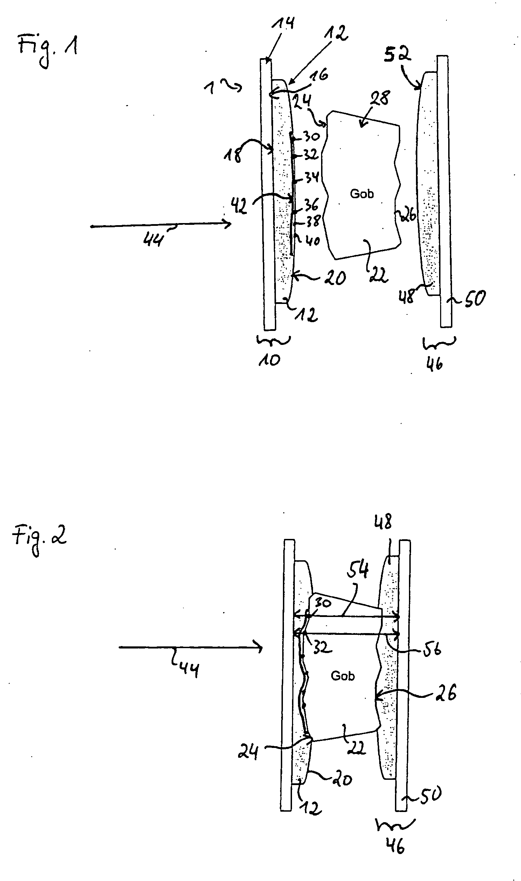

**Figur 1** zeigt eine Vorrichtung 1 mit einer Halteeinrichtung 10 und einem Kontaktelement 12. Das Kontaktelement 12 ist beispielhaft als verformbares Elastomer ausgebildet und an einem Basiselement 14 angeordnet. Das Basiselement 14 ist vorzugsweise plattenförmig ausgebildet. Das Basiselement 14 kann beispielsweise eine Glasplatte oder eine Elastomerplatte oder eine Verbundplatte aus mehreren Materialien sein. Das Kontaktelement 12 ist gemäß Figur 1 spaltfrei an dem Basiselement 14 angeordnet. In anderen Worten befindet sich zwischen einer hinteren Kontaktfläche 16 des Kontaktelements 12 und einer Kontaktfläche 18 des Basiselements 14 kein weiteres Material, insbesondere keine Luft bzw. ein anderes Gas. Weiterhin ist kein Freiraum zwischen den Kontaktflächen 16, 18, d.h. zwischen den Kontaktflächen 16, 18 ist auch kein Vakuum.

Ferner weist das Kontaktelement eine weitere, vordere Kontaktfläche 20 auf. Die vordere Kontaktfläche 20 liegt vorzugsweise einem Prüfobjekt 22 gegenüber. Das Prüfobjekt 22 ist beispielhaft ein sogenanntes Gob 22 (siehe oben). Das Gob 22 besteht beispielsweise aus Glas und ist im sichtbaren Spektralbereich, d.h. zwischen etwa 400 nm und etwa 700 nm im wesentlichen transparent. Das Gob 22 kann farbig sein, beispielsweise blau, rot, grün, gelb, usw. Alternativ oder zusätzlich kann das Prüfobjekt 22 bzw. das Gob 22 auch für elektromagnetische Strahlung außerhalb des sichtbaren Spektralbereichs zumindest teilweise transparent sein. Beispielsweise kann das Prüfobjekt 22 im Infrarotbereich, insbesondere im nahen und/oder fernen Infrarotbereich, und/oder im UV-Bereich und/oder im Mikrowellenbereich, usw. zumindest teilweise transparent sein. Es ist auch möglich, daß das Prüfobjekt im (für das menschliche Auge) sichtbaren Spektralbereich nicht oder nur bedingt transparent ist und in einem oder mehreren der oben beschriebenen Spektralbereiche zumindest teilweise transparent ist oder umgekehrt.

Der Begriff "zumindest teilweise transparent" im Sinne der vorliegenden Erfindung beinhaltet, daß das Prüfobjekt für elektromagnetische Strahlung etwa 100% durchlässig ist, oder zwischen etwa 70% und etwa 100%, bevorzugt zwischen etwa 80% und etwa 100%, durchlässig ist, insbesondere etwa 95% durchlässig ist oder etwa 90%, etwa 85%, etwa 80%, etwa 75%, etwa 70%, etwa 50%, etwa 25% oder etwa 10% durchlässig ist.

Das Prüfobjekt 22 ist beispielsweise kegelstumpfförmig ausgebildet. Das Prüfobjekt 22 umfaßt hierbei drei Flächen, eine Vorderfläche 24, eine Hinterfläche 26 als bevorzugte komplementäre Fläche und eine Mantelfläche 28. Gemäß Figur 1 ist das Prüfobjekt 22, d.h. das Gob 22 derart angeordnet, daß die Vorderfläche 24 des Gob 22 mit der vorderen Kontaktfläche 20 des Kontaktelements 12 in Kontakt treten kann. Das Gob 22 kann aber auch anders angeordnet sein. Beispielsweise kann das Gob 22 auch gedreht angeordnet sein, so daß die Hinterfläche 26 mit dem Kontaktelement 12 in Kontakt tritt oder die Mantelfläche 28 mit dem Kontaktelement 12 in Kontakt tritt.

Beispielsweise kann die vordere Fläche 24 des Gobs 22 einen Durchmesser von etwa 40 mm bis etwa 70 mm, besonders bevorzugt von etwa 50 mm bis etwa 60 mm, ganz besonders bevorzugt etwa 55 mm aufweisen.

Weiterhin kann die hintere Fläche 26 des Gobs 22 einen Durchmesser von etwa 35 mm bis etwa 65 mm, besonders bevorzugt von etwa 45 mm bis etwa 55 mm, ganz besonders bevorzugt von etwa 50 mm aufweisen.

Die Höhe des Gobs 22 kann zwischen etwa 10 mm bis etwa 40 mm, bevorzugt zwischen etwa 20 mm und etwa 30 mm, ganz besonders bevorzugt etwa 25 mm betragen.

Beispielhaft ist in Figur 1 ein erster Kontaktpunkt 30, ein zweiter Kontaktpunkt 32, ein dritter Kontaktpunkt 34, ein vierter Kontaktpunkt 36, ein fünfter Kontaktpunkt 38 und ein sechster Kontaktpunkt 40 dargestellt. Die Kontaktpunkte 30 - 40 sind lediglich beispielhaft. Es ist auch möglich, daß nur 2, 3, 4 oder 5 Kontaktpunkte vorliegen. Alternativ können auch eine Vielzahl weiterer Kontaktpunkte vorliegen. Besonders bevorzugt existieren nicht individuelle Kontaktpunkte, sondern eine Teilkontaktfläche 42, die eine Teilfläche der Kontaktfläche 20 ist.

Die Kontaktpunkte 30 - 40 und/oder die Teilkontaktfläche 42 sind keine körperlichen Bauelemente des Kontaktelements 12. Vielmehr repräsentieren die Kontaktpunkte 30 - 40 sowie die Teilkontaktfläche 42 geometrische Bereiche der Kontaktfläche 20. Insbesondere tritt die Kontaktfläche 20 zumindest an den Kontaktpunkten 30 - 40 bzw. an der Teilkontaktfläche 42 mit der Vorderfläche 24 des Gobs 22 in Kontakt.

Weiterhin ist in Figur 1 beispielhaft eine Durchstrahlrichtung 44 dargestellt, entlang welcher elektromagnetische Strahlung (nicht gezeigt) die Halteeinrichtung 10, d.h. das Basiselement 14 und das Kontaktelement 12, und das Gob 22 zumindest teilweise durchstrahlt. Die optische Durchstrahlrichtung kann im wesentlichen senkrecht zu der Kontaktfläche 16 bzw. der Kontaktfläche 18 sein.

Weiterhin ist in Figur 1 eine komplementäre Halteeinrichtung 46 mit einem komplementären Kontaktelement 48 und einem komplementären Basiselement 50 mit einer komplementären Kontaktfläche 52 gezeigt. Die komplementäre Halteeinrichtung 46 kann im wesentlichen identisch zu der Halteeinrichtung 10 sein.

**Figur 2** zeigt die Vorrichtung 1 gemäß Figur 1, jedoch ist das Prüfobjekt 22 sowohl an dem Kontaktelement 12 als auch an dem komplementären Kontaktelement 48 angeordnet. Das Kontaktelement 12 und/oder das komplementäre Kontaktelement 48 können beispielsweise Kissen aus einem Elastomer sein. Wie in Figur 2 dargestellt, ist das Prüfobjekt 22 in Kontakt mit dem Kontaktelement 12, wobei das Kontaktelement 12 aufgrund der Oberflächenform der Vorderfläche 24 des Gobs 22 verformt ist. Insbesondere ist die vordere Kontaktfläche 20 des Kontaktelements 12 an die Vorderfläche 24 des Prüfobjekts 22, d.h. des Gobs 22 angepaßt. Dies gilt insbesondere an den Kontaktpunkten 30 - 40 bzw. an der Teilkontaktfläche 42, an denen bzw. der das Kontaktelement 12 bzw. dessen vordere Kontaktfläche 20 im wesentlichen spaltfrei mit der Vorderfläche 24 des Gobs 22 in Kontakt ist. Ebenso ist das komplementäre Kontaktelement 48 mit der Hinterfläche 26 (als bevorzugte komplementäre Fläche) des Gobs 22 in Kontakt, wobei die komplementäre Kontaktfläche 52 des komplementären Kontaktelements 48 aufgrund der Oberflächenform der Hinterfläche 26 des Gobs 22 verformt ist. Die Teilkontaktfläche ist vorzugsweise identisch zu der vorderen Fläche 24, wenn das Gob 22 und das Kontaktelement 12, insbesondere deren Kontaktfläche

Wird elektromagnetische Strahlung parallel zur Durchstrahlrichtung 44 eingestrahlt, so ist die optische Weglänge elektromagnetischer Strahlung entlang des Wegs 54, durch den Kontaktpunkt 30, gleich der optischen Weglänge elektromagnetischer Strahlung entlang des Wegs 56, durch den Kontaktpunkt 32. Dies gilt, da das Kontaktelement 12, das Gob 22 und das komplementäre Kontaktelement 48 im wesentlichen einen identischen optischen Brechungsindex aufweisen. Weiterhin ist an dem Kontaktpunkt 30 und an dem Kontaktpunkt 32 die Kontaktfläche 20 mit dem Gob 22 spaltfrei in Kontakt, wodurch beim Übergang der elektromagnetischen Strahlung von dem Kontaktelement 12 in das Gob 22 keine Brechungsindexänderung vorliegt. Optisch verhalten sich somit das Kontaktelement 12 und das Gob 22 als ein einheitlicher Körper. Dies gilt ebenso an dem Kontaktpunkt 32. Weiterhin gilt dies für die optischen Wege (nicht gezeigt) an den weiteren Kontaktpunkten 34 - 40 bzw. der Teilkontaktfläche 42. Weiterhin gilt dies sinngemäß auch für die Hinterfläche 26 des Gobs 22 und das komplementäre Kontaktelement 48.

Der optische Weg 54, erstreckt sich, wie in Figur 2 gezeigt, durch das Kontaktelement 12, das Gob 22 und das komplementäre Kontaktelement 48. Der optische Weg kann auch den Weg durch das Basiselement 14 und das komplementäre Basiselement 50 umfassen. Gleiches gilt sinngemäß für den optischen Weg 56.

Für den Fall, daß beispielsweise die Hinterfläche 26 des Gobs 22 bereits eine im wesentlichen plane Fläche ist, kann auf das komplementäre Kontaktelement 48 verzichtet werden. Es kann in diesem Fall ausreichend sein, ausschließlich die Halteeinrichtung 10 bereit zu stellen und das Gob 22 mit der Halteeinrichtung 10 in Kontakt zu bringen. Hierbei kann der Kontakt mit dem Kontaktelement 12 derart sein kann, daß das Gob 22 an dem Kontaktelement 12 hält. Beispielsweise kann das Kontaktelement 12 klebende Eigenschaften aufweisen, aufgrund derer das Gob 22 an dem Kontaktelement 12 haftet.

Ebenso ist es nicht notwendig, das Basiselement 14 anzuordnen. Vielmehr kann beispielsweise die Kontaktfläche 18 des Kontaktelements 12 derart ausgebildet sein, daß es das Basiselement 14 ersetzt. Alternativ können das Basiselement 14 und das Kontaktelement auch einstückig, insbesondere integral ausgebildet sein. Das Basiselement 14 kann auch eine Vorderfläche einer Linse bzw. eines Objektivs (nicht gezeigt) sein.

Somit ermöglicht die Vorrichtung 1 eine optische Inspektion im Durchlicht beispielsweise ein Überprüfen der Abbildung der Vorrichtung 1 in Durchlicht (bei Einstrahlung von elektromagnetischer Strahlung parallel zur Durchstrahlrichtung 44), und/oder Überprüfung der Absorption und/oder Überprüfung der Streuung und/oder Überprüfung der Polarisation anhand einer Polarisationsoptik. Vorteilhafterweise wird bzw. werden anstelle einer Immersion in einer Flüssigkeit die Oberfläche 24 und/oder die Oberfläche 26 des Gobs 22 mit einem indexangepaßten, transparenten, elastischen Polymer, beispielsweise Silikon (als bevorzugter Ausführungsform des Kontaktelements 12 und/oder des komplementären Kontaktelements 48) in Kontakt gebracht. Der Brechungsindex des Gobs kann beispielsweise annähernd n=1,522 sein. Dieser Wert ist mit Silikon-Elastomeren erreichbar, wie dies beispielsweise in einem Datenblatt der Firma Dow Corning mit Silikon-Elastomeren für ein Produkt mit der Bezeichnung JRC 6175 beschrieben sind.

Die in Figur 2 stark übertriebene Welligkeit der Vorderfläche 24 und/oder der Hinterfläche 26 des Gobs 22 wird durch das Elastomer spaltfrei ausgeglichen, so daß die optische Weglänge durch den Verbund Glasplatte 14 - Elastomer 12 - Gob 22 - Elastomer 48 - Glasplatte 50 vorzugsweise an allen Stellen weitgehend identisch ist. Restverzerrungen durch die Deformation des Elastomers sind jedoch möglich und können bei der Auswertung berücksichtigt werden.

Die Transmission durch den Verbund, d.h. die Halteeinrichtung 10, das Prüfobjekt 22 und die komplementäre Halteeinrichtung 46, kann zusätzlich durch eine Antireflexbeschichtung auf je einer oder beiden Seiten der Glasplatten 14, 50 verbessert werden.

Zum Schutz des Elastomers 12, 48 vor Verschmutzungen ist erfindungsgemäß eine dünne Folie (nicht gezeigt) oder eine Antihaftschicht auf die Seite 20, 52, die mit dem Gob 22 in Kontakt steht, aufgebracht.

Alternativ zu Figur 2 kann das Elastomer 12 auch mit der Mantelfläche 28 in Kontakt gebracht werden. Bei Kontakt an zwei diametral gegenüberliegenden Seiten der Mantelfläche 28 kann ebenfalls eine optische Inspektion erfolgen. Somit können vor allem Schlieren visualisiert werden, die dicht unter der Vorderfläche 24 und/oder der Hinterfläche 26 liegen.

Alternativ kann statt eines Elastomers 12, 48 ein Beutel (nicht gezeigt) aus einer dünnen elastischen Folie benutzt werden, der mit einer Flüssigkeit oder einem Gel gefüllt ist, die/das dem Brechungsindex des Glaskörpers 22 als bevorzugtem Prüfobjekt 22 angeglichen ist. Idealer Weise ist auch die Folie im Brechungsindex angepaßt. Durch die viskose Verformung der Flüssigkeit oder des Gels wird im wesentlichen der gleiche ausgleichende Effekt an der Oberfläche erzielt wie beim Elastomer 12, 48. Vorteilhaft ist bei dieser Ausführung, daß mechanische Spannungen, wie sie z.B. bei der Verformung des Elastomers vorkommen können, in der Flüssigkeit bzw. in dem Gel im wesentlichen nicht auftreten. Somit werden spannungsinduzierte Änderungen des Brechungsindex oder Spannungsdoppelbrechung, wie sie im Elastomer 12, 48 auftreten können, durch Verwendung eines Gels bzw. einer Flüssigkeit, im wesentlichen umgangen.

Die Vorrichtung 1 kann beispielsweise in herkömmlichen Glasprüfmaschinen eingesetzt werden, wobei durch Einsatz von Kameratechnik, mit z.B. CCD und/oder CMOS eine automatisierte optische Prüfung durch Kamera und Bildverarbeitung möglich ist. Blasen in dem Prüfobjekt können beispielsweise durch das verursachte Streulicht erkannt werden.

Die vorliegende Erfindung ist nicht auf die vorangehende Beschreibung bevorzugter Ausführungsformen beschränkt. Vielmehr können einzelne Bestandteile der vorangehend beschriebenen Ausführungsformen beliebig miteinander zu weiteren Ausführungsformen kombiniert werden. Insbesondere kann die elektromagnetische Strahlung homogene, gleichgerichtete elektromagnetische Strahlung sein. Zum Beispiel kann die elektromagnetische Strahlung polarisiert sein, insbesondere linear oder zirkular polarisiert sein.

### Bezugszeichenliste

- 1: Vorrichtung
- 10: Halteeinrichtung
- 12: Kontaktelement
- 14: Basiselement
- 16: Kontaktfläche
- 18: Kontaktfläche
- 20: Kontaktfläche
- 22: Prüfobjekt/Gob
- 24: Vorderfläche

- 26: Hinterfläche
- 28: Mantelfläche
- 30: Kontaktpunkt
- 32: Kontaktpunkt
- 34: Kontaktpunkt
- 36: Kontaktpunkt
- 38: Kontaktpunkt
- 40: Kontaktpunkt
- 42: Teilkontaktfläche
- 44: Durchstrahlrichtung
- 46: komplementäre Halteeinrichtung
- 48: komplementäres Kontaktelement
- 50: komplementäres Basiselement
- 52: komplementäre Kontaktfläche
- 54: optischer Weg
- 56: optischer Weg

## Patentansprüche

1. Verfahren zum Prüfen eines Prüfobjekts (22) mit den Schritten:
- Anordnen des Prüfobjekts (22) an einem verformbaren Kontaktelement (12) einer Halteeinrichtung (10),
wobei das Kontaktelement (12) zumindest teilweise verformt wird, so daß zumindest eine Teilfläche (24) des Prüfobjekts (22) mit zumindest einer Teilfläche (42) des Kontaktelements (12) spaltfrei in Kontakt ist und
wobei für zumindest zwei Kontaktpunkte (30-40) des Kontaktelements, die mit der Teilfläche (24) des Prüfobjekts (22) in Kontakt sind, bei einem Durchstrahlen mittels elektromagnetischer Strahlung, welche parallel zu einer vordefinierten Durchstrahlrichtung (44) ist, eine optische Weglänge (54, 56) der elektromagnetischen Strahlung durch die Halteeinrichtung (10) und das Prüfobjekt (22) im wesentlichen identisch ist;
- Durchstrahlen der elektromagnetischen Strahlung parallel zu der vordefinierten Durchstrahlrichtung (44) durch die Halteeinrichtung (10) und das Prüfobjekt (22);
- Detektieren der elektromagnetischen Strahlung nach Durchstrahlen; und
- Auswerten der detektierten elektromagnetischen Strahlung
**dadurch gekennzeichnet, daß**
-- das Kontaktelement (12) aus einem Elastomer besteht, welches zumindest bereichsweise von einer Folie umgeben ist,
oder
-- das Kontaktelement (12) aus einer Flüssigkeit besteht, die sich in einem aus einer Folie ausgebildeten Beutel befindet ,
oder
-- das Kontaktelement (12) aus einem Gel besteht, das sich in einem aus einer Folie ausgebildeten Beutel befindet.

2. Verfahren nach Anspruch 1, mit dem weiteren Schritt:
- Anordnen des Prüfobjekts (22) an einem verformbaren komplementären Kontaktelement (48) einer komplementären Halteeinrichtung (46), wobei das komplementäre Kontaktelement (48) zumindest teilweise verformt wird, so daß zumindest eine komplementäre Teilfläche des Prüfobjekts (22) mit zumindest einer komplementären Teilfläche des komplementären Kontaktelements (48) spaltfrei in Kontakt ist,
wobei für zumindest zwei Kontaktpunkte (30 - 40) des Kontaktelements (12) und/oder des komplementären Kontaktelements (48), die mit der Teilfläche des Prüfobjekts (22) und/oder der komplementären Teilfläche (26) des Prüfobjekts (22) in Kontakt sind, bei dem Durchstrahlen mittels elektromagnetischer Strahlung, welche parallel zu der vordefinierten Durchstrahlrichtung (42) ist, eine optische Weglänge (54, 56) der elektromagnetischen Strahlung durch die Halteeinrichtung (10), das Prüfobjekt (22) und die komplementäre Halteeinrichtung (46) im wesentlichen identisch ist;
wobei beim Durchstrahlen der elektromagnetischen Strahlung durch die Halteeinrichtung (10) und das Prüfobjekt (22) auch die komplementäre Halteeinrichtung (46) durchstrahlt wird.

3. Verfahren nach Anspruch 2,
-- wobei das komplementäre Kontaktelement (48) aus einem Elastomer besteht, welches zumindest bereichsweise von einer Folie umgeben ist,
oder
-- wobei das komplementäre Kontaktelement (48) aus einer Flüssigkeit besteht, die sich in einem aus einer Folie ausgebildeten Beutel befindet,
oder
-- wobei das komplementäre Kontaktelement (48) aus einem Gel besteht, das sich in einem aus einer Folie ausgebildeten Beutel befindet.

4. Verfahren nach einem der vorigen Ansprüche mit dem initialen Schritt:
- Auswahl des Kontaktelements (12) und/oder des komplementären Kontaktelements (48) mit einem optischen Brechungsindex, der im wesentlichen gleich dem optischen Brechungsindex des Prüfobjektes (22) ist.

5. Verfahren nach einem der vorangegangenen Ansprüche, wobei die elektromagnetische Strahlung anhand einer Bilderzeugungseinrichtung detektiert wird.

6. Verfahren nach Anspruch 5, wobei die detektierte elektromagnetische Strahlung automatisch anhand eines Bildverarbeitungsverfahrens untersucht und ausgewertet wird.

7. Verfahren nach einem der vorangegangenen Ansprüche, wobei die elektromagnetische Strahlung homogenes Licht ist und wobei anhand des Bildverarbeitungsverfahrens Inhomogenitäten in der detektieren elektromagnetischen Strahlung detektiert werden.

8. Vorrichtung (1) zum Halten zumindest eines Prüfobjekts (22) mit einer Halteeinrichtung (10), mit zumindest einem verformbaren Kontaktelement (12), wobei an dem verformbaren Kontaktelement (12) ein Prüfobjekt (22) derart anordenbar ist, daß
-- zumindest eine Teilfläche (42) des Kontaktelements (12) mit zumindest einer Teilfläche (24) des Prüfobjekts (22) im wesentlichen spaltfrei in Kontakt bringbar ist und
-- für zumindest zwei Kontaktpunkte (30 - 40) des Kontaktelements (12), die mit der Teilfläche (24) des Prüfobjekts (22) in Kontakt sind, bei einem Durchstrahlen mittels elektromagnetischer Strahlung, welche parallel zu einer vordefinierten Durchstrahlrichtung (44) ist, eine optische Weglänge (54, 56) der elektromagnetischen Strahlung durch die Halteeinrichtung (10) und das Prüfobjekt (22) im wesentlichen identisch ist,
**dadurch gekennzeichnet, daß**
-- das Kontaktelement (12) (48) aus einem Elastomer besteht, welches zumindest bereichsweise von einer Folie umgeben ist,
oder
-- das Kontaktelement (12) (48) aus einer Flüssigkeit besteht, die sich in einem aus einer Folie ausgebildeten Beutel befindet,
oder
-- das Kontaktelement (12) (48) aus einem Gel besteht, das sich in einem aus einer Folie ausgebildeten Beutel befindet.

9. Vorrichtung (1) nach Anspruch 8 mit einer komplementären Halteeinrichtung (46) mit zumindest einem verformbaren komplementären Kontaktelement (48), wobei zumindest eine komplementäre Teilfläche (26) des Prüfobjekts (22) mit zumindest einer komplementären Teilfläche des komplementären Kontaktelements (48) im wesentlichen spaltfrei in Kontakt bringbar ist.

10. Vorrichtung nach Anspruch 9,
-- wobei das komplementäre Kontaktelement (48) aus einem Elastomer besteht, welches zumindest bereichsweise von einer Folie umgeben ist,
oder
-- wobei das komplementäre Kontaktelement (48) aus einer Flüssigkeit besteht, die sich in einem aus einer Folie ausgebildeten Beutel befindet,
oder
-- wobei das komplementäre Kontaktelement (48) aus einem Gel besteht, das sich in einem aus einer Folie ausgebildeten Beutel befindet.

11. Vorrichtung (1) nach Anspruch 9 oder 10, wobei das Prüfobjekt (22) zumindest teilweise zwischen dem Kontaktelement (12) und dem komplementären Kontaktelement (48) anordenbar ist.

12. Vorrichtung (1) nach einem der Ansprüche 8 bis 11, wobei die Halteeinrichtung (10) eine Basiseinrichtung (14) aufweist, an welcher das verformbare Kontaktelement (12) angeordnet ist und/oder wobei die komplementäre Halteeinrichtung (46) eine komplementäre Basiseinrichtung (50) aufweist, an welcher das verformbare komplementäre Kontaktelement (48) angeordnet ist.

13. Vorrichtung (1) nach einem der Ansprüche 8 bis 12, wobei die Basiseinrichtung (14) und/oder die komplementäre Basiseinrichtung (50) planparallele Flächen aufweist bzw. aufweisen.

14. Vorrichtung (1) nach einem der Ansprüche 8 bis 13, mit einer Detektionseinrichtung, welche ausgelegt ist elektromagnetische Strahlung, nach zumindest teilweisem Durchstrahlen der Halteeinrichtung (10) und zumindest teilweisem Durchstrahlen des Prüfobjekts (22) zu detektieren.

15. Vorrichtung (1) nach einem der Ansprüche 8 bis 14 mit einer Auswerteeinrichtung, welche ausgelegt ist, die detektierte elektromagnetische Strahlung auszuwerten.

16. Vorrichtung (1) nach einem der Ansprüche 8 bis 15 mit einer Darstellungseinrichtung, welche ausgelegt ist, die detektierte elektromagnetische Strahlung darzustellen.

17. Anordnung umfassend:
- ein Prüfobjekt (22) und
- eine Vorrichtung (1) nach einem der Ansprüche 8 bis 16,
wobei das verformbare Kontaktelement (12) und/oder das komplementäre verformbare Kontaktelement (48) einen optischen Brechungsindex aufweist bzw. aufweisen, der im wesentlichen gleich einem optischen Brechungsindex des Prüfobjektes (22) ist.

## Claims

1. A method for inspecting a test object (22) involving the steps:
- arrangement of a test object (22) on a deformable contact element (12) of a holding device (10),
wherein the contact element (12) is at least partially deformed so that at least one partial surface (24) of the test object (22) contacts at least one partial surface (42) of the contact element (12) without a gap, and
wherein, for at least two contact points (30-40) of the contact element that are in contact with the partial surface (24) of the test object (22), an optical path length (54, 56) of the electromagnetic radiation through the holding device (10) and test object (22) is substantially identical when transirradiated by electromagnetic radiation that is parallel to a predefined transirradiation direction (44);
- transirradiation by electromagnetic radiation parallel to the predefined transirradiation direction (44) through the holding device (10) and the test object (22);
- detection of electromagnetic radiation after transirradiation; and
- evaluation of the detected electromagnetic radiation, **characterized in that**
- the contact element (12) consists of an elastomer that is surrounded at least in sections by a film,
or
- the contact element (12) consists of a liquid that is in a bag made of a film,
or
- the contact element (12) consists of a gel that is in a bag made of a film.

2. The method according to claim 1 having the additional step:
- arrangement of the test object (22) on a deformable, complementary contact element (48) of a complementary holding device (46), wherein the complementary contact element (48) is at least partially deformed so that at least one complementary partial surface of the test object (22) contacts at least one complementary partial surface of the complementary contact element (48) without a gap,
wherein, for at least two contact points (30-40) of the contact element (12) and/or the complementary contact element (48) that are in contact with the partial surface of the test object (22) and/or the complementary partial surface (26) of the test object (22), an optical path length (54, 56) of the electromagnetic radiation through the holding device (10), test object (22) and the complementary holding device (46) is substantially identical when transirradiated by electromagnetic radiation that is parallel to the predefined transirradiation direction (42);
wherein the complementary holding device (46) is also transirradiated when the electromagnetic radiation transirradiates the holding device (10) and the test object (22).

3. The method according to claim 2,
- wherein the complementary contact element (48) consists of an elastomer that is surrounded at least in sections by a film,
or
- wherein the complementary contact element (48) consists of a liquid that is in a bag made of a film,
or
- wherein the complementary contact element (48) consists of a gel that is in a bag made of a film.

4. The method according to one of the preceding claims having the initial step:
- selection of the contact element (12) and/or the complementary contact element (48) with an optical refraction index that is substantially the same as the optical refraction index of the test object (22).

5. The method according to one of the preceding claims, wherein the electromagnetic radiation is detected by means of an imaging device.

6. The method according to claim 5, wherein the detected electromagnetic radiation is automatically investigated and evaluated by means of an imaging method.

7. The method according to one of the preceding claims, wherein the electromagnetic radiation is homogenous light, and wherein inhomogeneities in the detected electromagnetic radiation are detected by means of the imaging method.

8. A device (1) for holding at least one test object (22) with a holding device (10), having at least one deformable contact element (12), wherein a test object (22) is arranged on the deformable contact element (12) such that:
- at least one partial surface (42) of the contact element (12) can be brought into contact with at least one partial surface (24) of the test object (22) substantially gap-free, and
- for at least two contact points (30 - 40) of the contact element (12) that are in contact with the partial surface (24) of the test object (22), an optical path length (54, 56) of the electromagnetic radiation through the holding device (10) and test object (22) is substantially identical when transirradiated by electromagnetic radiation that is parallel to a predefined transirradiation direction (44);
**characterized in that**:
- the contact element (12) (48) consists of an elastomer that is surrounded at least in sections by a film,
or
- the contact element (12) (48) consists of a liquid that is in a bag made of a film,
or
- the contact element (12) (48) consists of a gel that is in a bag made of a film.

9. The device (1) according to claim 8 having a complementary holding device (46) with at least one deformable complementary contact element (48), wherein at least one complementary partial surface (26) of the test object (22) can be brought into contact with at least one complementary partial surface of the complementary contact element (48) substantially gap-free.

10. The device according to claim 9,
- wherein the complementary contact element (48) consists of an elastomer that is surrounded at least in sections by a film,
or
- wherein the complementary contact element (48) consists of a liquid that is in a bag made of a film,
or
- wherein the complementary contact element (48) consists of a gel that is in a bag made of a film.

11. The device (1) according to claim 9 or 10, wherein the test object (22) can be arranged at least partially between the contact element (12) and the complementary contact element (48).

12. The device (1) according to one of claims 8 to 11, wherein the holding device (10) has a base device (14) on which the deformable contact element (12) is arranged, and/or
wherein the complementary holding device (46) has a complementary base device (50) on which the deformable complementary contact element (48) is arranged.

13. The device (1) according to one of claims 8 to 12, wherein the base device (14) and/or the complementary base device (50) has or respectively have plane-parallel surfaces.

14. The device (1) according to one of claims to 8 to 13 having a detection device that is designed to detect electromagnetic radiation after the holding device (10) is at least partially transirradiated, and the test object (22) is at least partially transirradiated.

15. The device (1) according to one of claims 8 to 14 having an evaluation device that is designed to evaluate the detected electromagnetic radiation.

16. The device (1) according to one of claims 8 to 15 having a display device that is designed to display the detected electromagnetic radiation.

17. An arrangement comprising:
- a test object (22) and
- a device (1) according to one of claims 8 to 16,
wherein the deformable contact element (12) and/or the complementary, deformable contact element (48) has or respectively have an optical refraction index that is substantially the same as an optical refraction index of the test object (22).

## Revendications

1. Procédé pour l'inspection d'un objet de contrôle (22) comprenant les étapes suivantes :
- agencement de l'objet de contrôle (22) contre un élément de contact déformable (12) d'un dispositif de support (10),
l'élément de contact (12) étant déformé au moins partiellement, de telle sorte qu'au moins une surface partielle (24) de l'objet de contrôle (22) est en contact sans jeu avec au moins une surface partielle (42) de l'élément de contact (12) et
pour au moins deux points de contact (30-40) de l'élément de contact, lesquels sont en contact avec la surface partielle (24) de l'objet de contrôle (22), lors d'une radiographie au moyen du rayonnement électromagnétique qui est parallèle à une direction radiographique prédéfinie (44), un trajet optique (54, 56) du rayonnement électromagnétique à travers le dispositif de support (10) et l'objet de contrôle (22) est sensiblement identique ;
- radiographie du rayonnement électromagnétique parallèle à la direction radiographique prédéfinie (44) à travers le dispositif de support (10) et l'objet de contrôle (22) ;
- détection du rayonnement électromagnétique après la radiographie ; et
- analyse du rayonnement électromagnétique détecté **caractérisé en ce que**
- l'élément de contact (12) est formé d'un élastomère qui est entouré au moins partiellement d'un film,
ou
l'élément de contact (12) est formé d'un liquide qui se trouve dans une poche formée d'un film,
ou
l'élément de contact (12) est formé d'un gel qui se trouve dans une poche formée d'un film.

2. Procédé selon la revendication 1, comprenant l'autre étape :
- agencement de l'objet de contrôle (22) contre un élément de contact complémentaire déformable (48) d'un dispositif de support complémentaire (46), l'élément de contact complémentaire (48) étant déformé au moins partiellement, de sorte qu'au moins une surface partielle complémentaire de l'objet de contrôle (22) est en contact sans jeu avec au moins une surface partielle complémentaire de l'élément de contact complémentaire (48),
pour au moins deux points de contact (30-40) de l'élément de contact (12) et/ou de l'élément de contact complémentaire (48), qui sont en contact avec la surface partielle de l'objet de contrôle (22) et/ou de la surface partielle complémentaire (26) de l'objet de contrôle (22), lors de la radiographie au moyen du rayonnement électromagnétique qui est parallèle à la direction radiographique prédéfinie (42), un trajet optique (54, 56) du rayonnement électromagnétique à travers le dispositif de support (10), l'objet de contrôle (22) et le dispositif de support complémentaire (46) est sensiblement identique ;
- lors de la radiographie du rayonnement électromagnétique à travers le dispositif de support (10) et l'objet de contrôle (22), le dispositif de support complémentaire (46) est également radiographié.

3. Procédé selon la revendication 2,
l'élément de contact complémentaire (48) étant formé d'un élastomère qui est entouré au moins partiellement d'un film,
ou
l'élément de contact complémentaire (48) étant formé d'un liquide qui se trouve dans une poche formée d'un film,
ou
l'élément de contact complémentaire (48) étant formé d'un gel qui se trouve dans une poche formée d'un film.

4. Procédé selon une des revendications antérieures comprenant l'étape initiale :
- sélection de l'élément de contact (12) et/ou de l'élément de contact complémentaire (48) présentant un indice de réfraction optique qui est essentiellement identique à l'indice de réfraction optique de l'objet de contrôle (22).

5. Procédé selon une des revendications précédentes, le rayonnement électromagnétique étant détecté au moyen d'un dispositif de production d'images.

6. Procédé selon la revendication 5, le rayonnement électromagnétique détecté étant analysé et interprété automatiquement au moyen d'un procédé de traitement d'images.

7. Procédé selon une des revendications précédentes, le rayonnement électromagnétique étant une lumière homogène, et des défauts d'homogénéité dans le rayonnement électromagnétique détecté étant détectés au moyen du procédé de traitement d'images.

8. Dispositif (1) de retenue d'au moins un objet de contrôle (22) avec un dispositif de support (10), avec au moins un élément de contact déformable (12), un objet de contrôle (22) pouvant être agencé contre l'élément de contact déformable (12), de telle sorte
- qu'au moins une surface partielle (42) de l'élément de contact (12) peut être amenée en contact essentiellement sans jeu avec au moins une surface partielle (24) de l'objet de contrôle (22) et
- pour au moins deux points de contact (30-40) de l'élément de contact (12) qui sont en contact avec la surface partielle (24) de l'objet de contrôle (22), lors d'une radiographie au moyen du rayonnement électromagnétique qui est parallèle à une direction radiographique prédéfinie (44), un trajet optique (54, 56) du rayonnement électromagnétique à travers le dispositif de support (10) et l'objet de contrôle (22) est sensiblement identique,
**caractérisé en ce que**
l'élément de contact (12) (48) est formé d'un élastomère qui est entouré au moins partiellement d'un film,
ou
l'élément de contact (12) (48) est formé d'un liquide qui se trouve dans une poche formée d'un film,
ou
l'élément de contact (12) (48) est formé d'un gel qui se trouve dans une poche formée d'un film.

9. Dispositif (1) selon la revendication 8 comprenant un dispositif de support complémentaire (46) avec au moins un élément de contact complémentaire déformable (48), au moins une surface partielle complémentaire (26) de l'objet de contrôle (22) pouvant être amenée en contact essentiellement sans jeu avec au moins une surface partielle complémentaire de l'élément de contact complémentaire (48).

10. Dispositif (1) selon la revendication 9,
l'élément de contact complémentaire (48) étant formé d'un élastomère qui est entouré au moins partiellement d'un film,
ou
l'élément de contact complémentaire (48) étant formé d'un liquide qui se trouve dans une poche formée d'un film,
ou
l'élément de contact complémentaire (48) étant formé d'un gel qui se trouve dans une poche formée d'un film.

11. Dispositif (1) selon les revendications 9 ou 10, l'objet de contrôle (22) pouvant être agencé au moins partiellement entre l'élément de contact (12) et l'élément de contact complémentaire (48).

12. Dispositif (1) selon une des revendications 8 à 11, le dispositif de support (10) présentant un dispositif de base (14) contre lequel est disposé l'élément de contact déformable (12) et/ou
le dispositif de support complémentaire (46) présentant un dispositif de base complémentaire (50) contre lequel est disposé l'élément de contact complémentaire déformable (48).

13. Dispositif (1) selon une des revendications 8 à 12, le dispositif de base (14) et/ou le dispositif de base complémentaire (50) présentant des surfaces planes et parallèles.

14. Dispositif (1) selon une des revendications 8 à 13, comprenant un dispositif de détection qui est conçu pour détecter le rayonnement électromagnétique, après la radiographie au moins partielle du dispositif de support (10) et la radiographie au moins partielle de l'objet de contrôle (22).

15. Dispositif (1) selon une des revendications 8 à 14 comprenant un dispositif d'évaluation qui est conçu pour évaluer le rayonnement électromagnétique détecté.

16. Dispositif (1) selon une des revendications 8 à 15 comprenant un dispositif de représentation qui est conçu pour représenter le rayonnement électromagnétique détecté.

17. Ensemble comprenant :
un objet de contrôle (22) et
un dispositif (1) selon une des revendications 8 à 16,
l'élément de contact déformable (12) et/ou l'élément de contact complémentaire déformable (48) présentant un indice de réfraction optique qui est essentiellement identique à un indice de réfraction optique de l'objet de contrôle (22).
